# EUROPÄISCHE PATENTSCHRIFT

(11) **EP 1 788 699 B1**
(45) Veröffentlichungstag und Bekanntmachung des Hinweises auf die Patenterteilung: **24.06.2009**
(21) Anmeldenummer: 06121271.8
(22) Anmeldetag: 26.09.2006
(51) Int. Cl.: H02P 5/68, H02P 7/00

(54) **Schaltungsanordnung und Verfahren zum Betreiben einer Schaltungsanordnung**
Circuit arrangement and method for operating a circuit arrangement
Ensemble circuit et procédé pour faire fonctionner un ensemble circuit

(30) Priorität: 22.11.2005 DE 102005055471
(43) Veröffentlichungstag der Anmeldung: 23.05.2007
(73) Patentinhaber: ROBERT BOSCH GMBH, 70442 Stuttgart (DE)
(72) Erfinder: Heimburger, Stefan, 77731, Willstaett-Legelshurst (DE); Krueger, Hartmut, 77830, Buehlertal (DE); Fricker, David, 67500, Hagenau (FR); Lieblang, Florian, 77830, Buehlertal (DE)

(56) Entgegenhaltungen:
- GB-A- 629 390
- US-A- 2 399 699
- US-A1- 2004 257 022

## Beschreibung

### Stand der Technik

Die Erfindung geht aus von einer Schaltungsanordnung nach dem Oberbegriff des Patentanspruchs 1 und einem Verfahren zum Betreiben einer Schaltungsanordnung nach dem Oberbegriff des Patentanspruchs 11.

Das Dokument GB-A-629,390 zeigt eine Schaltungsanordnung für Elektromotoren. Gruppenschaltungen mit zwei oder mehr Elektromotoren werden z.B. in Sitzsteuergeräten zur Ansteuerung von Fahrzeugsitzen eingesetzt. Es können mehrere Gruppen vorgesehen sein. Eine Gruppenschaltung kann z.B. zur Ansteuerung einer Längsverstellung und einer Höhenverstellung des einen Sitzes, eine andere zur Lehnenverstellung und zur Höhenverstellung desselben oder eines anderen Sitzes vorgesehen sein. Üblicherweise soll nur ein Elektromotor in einer Gruppe angesteuert werden. Zur Ansteuerung der Elektromotoren werden üblicherweise Relais eingesetzt. Um die fließenden Motorströme bestimmen zu können, befindet sich in jedem Massepfad ein Präzisionsstrommesswiderstand, an dem die dort abfallende Spannung präzise gemessen und daraus der Motorstrom bestimmt werden kann. Diese Anordnung soll gewährleisten, dass der Motorstrom stets erfasst werden kann, z.B. beim Vorwärts- bzw. Rückwärtslauf sowie im Freilauffall, wenn beide Motorklemmen kurzgeschlossen sind. Allerdings ist eine große Anzahl an Komponenten wie Strommesswiderstände notwendig, die mit der Anzahl der Elektromotoren in der Gruppenschaltung ansteigt

### Vorteile der Erfindung

Es wird eine Schaltungsanordnung vorgeschlagen mit wenigstens zwei Elektromotoren, die in einer Gruppe zusammengeschaltet sind, bei der gleichsinnige Anschlüsse der Elektromotoren über eine gemeinsame erste elektrische Schaltkomponente so verschaltbar sind, dass die gleichsinnigen Anschlüsse dasselbe elektrisch Potenzial aufweisen. Es können vorteilhaft eine Reihe von Motorstrompfaden eingespart werden. Mit dem Wegfall der überflüssigen Motorstrompfade ist es möglich, in der Gruppe Strommesswiderstände einzusparen, wenn eine Strommessung erforderlich ist. Es werden in einer bevorzugten Ausgestaltung, unabhängig von der Anzahl der Elektromotoren in der Gruppe, lediglich zwei Strommesswiderstände in der Gruppenschaltung benötigt. Es können auch mehrere Gruppenschaltungen vorgesehen sein. Insgesamt können eine Reihe von Bauteilen, wie z.B. Relais, Strommesswiderstände und Operationsverstärker, eingespart werden. Statt der Strommesswiderstände können auch andere geeignete Strommesseinrichtungen vorgesehen sein. Es sind, bei n Elektromotoren, 2+n Relais und 2 Strommesswiderstände ausreichend. Elektromotoren, die nicht in Betrieb sind, können kurzgeschlossen und damit "blockiert" werden. Positive und negative Ströme sind in allen Betriebszuständen messbar. Fallen Relais aus ("Kleben"), können alle Elektromotoren weggeschaltet werden. Alternativ kann auch nur ein Strommesswiderstand eingesetzt werden, wenn eine differenzielle Spannungsmessung über den Strommesswiderstand erfolgt.

In einer günstigen Ausgestaltung ist die erste elektrische Schaltkomponente ausgebildet, die gleichsinnigen Anschlüsse wahlweise auf Potenzial oder Massepotenzial zu schalten. Das Vorzeichen des Potenzials hängt dabei von der Drehrichtung des Motors ab.

In einer weiteren günstigen Ausgestaltung sind, entsprechend der Anzahl der Elektromotoren in der Gruppe, weitere elektrische Schaltkomponenten vorgesehen, mit denen die Elektromotoren an ihrem jeweils anderen Anschluss unabhängig voneinander wahlweise auf Potenzial oder Massepotenzial schaltbar sind. Das Vorzeichen des Potenzials hängt dabei von der Drehrichtung des Motors ab.

In einer günstigen Ausgestaltung ist wenigstens eine der elektrischen Schaltkomponenten als Relais ausgebildet, insbesondere als Einfachrelais.

In alternativer Ausgestaltung kann wenigstens eine der elektrischen Schaltkomponenten als Halbleiterschaltung ausgebildet sein, z.B. als MOSFET.

In einer besonders günstigen Ausgestaltung sind in einer Gruppe genau zwei Strommesswiderstände vorgesehen, die jeweils in den Massepfaden angeordnet sind. In dieser Ausgestaltung ist die Zahl der Strommesswiderstände unabhängig von der Zahl der Elektromotoren, die als Gruppe zusammengeschaltet sind.

In alternativer Ausgestaltung kann in einer Gruppe eine von der Anzahl verwendeter Einfach- und Doppelrelais abhängige Anzahl von Strommesswiderständen vorgesehen sein. Gegenüber bekannten Ausgestaltungen sind auch hier weniger Strommesswiderstände notwendig.

In einer bevorzugten Ausgestaltung ist jeder Elektromotor der Gruppe einzeln und unabhängig von den anderen der Gruppe über eine geeignete Schalterstellung derart betreibbar ist, dass eine der beiden Anschlüsse an positivem Potenzial und die andere an negativem Potenzial oder umgekehrt liegt und der Stromfluss durch den Elektromotor dabei über mindestens einen Strommesswiderstand bestimmbar ist, oder die Anschlüsse kurzgeschlossen sind, wobei der Kurzschlusspfad über beide Strommesswiderstände oder eine geeignete Strommesseinrichtung geführt ist, oder der Strommesspfad zwischen den Anschlüssen entweder unterbrochen ist oder die Anschlüsse kurzgeschlossen sind, wobei dieser Kurzschlusspfad die Strommesswiderstände umgeht.

In günstiger Weiterbildung ist eine H-Brücke vorgesehen, bei der im Massepfad zwei Strommesswiderstände angeordnet sind, und mit der die Gruppe von Elektromotoren mit einem gewünschten Potenzial versorgbar ist.

In weiterer günstiger Weiterbildung sind die einzelnen Elektromotoren der Gruppe jeweils über einen Schalter auf das außen über die H-Gruppe gegebene Potenzial schaltbar oder abschaltbar.

In weiterer günstiger Weiterbildung ist das effektiv für den Betrieb der Elektromotoren verantwortliche elektrische Potenzial direkt von einer externen Spannungsquelle abgreifbar oder über eine Spannungsstellungseinrichtung auf ein gewünschtes Niveau einstellbar.

Es wird ein Verfahren zum Betreiben einer Schaltungsanordnung mit wenigstens zwei Elektromotoren in einer Gruppe einer Gruppenschaltung vorgeschlagen, bei dem gleichsinnige Anschlüsse der Elektromotoren über eine gemeinsame erste elektrische Schaltkomponente so verschaltet werden, dass die gleichsinnigen Anschlüsse dasselbe elektrische Potenzial aufweisen. Bevorzugt werden die gleichsinnigen Anschlüsse über ein gemeinsames Relais verschaltet.

Günstigerweise werden die Elektromotoren an ihrem jeweils anderen Anschluss unabhängig voneinander wahlweise auf Potenzial, bevorzugt Pluspotenzial, oder Massepotenzial geschaltet. Dies kann ebenfalls mit z.B. Relais erfolgen. Mit der ersten elektrischen Schaltkomponente werden jeweils das Pluspotenzial oder Masse für alle Elektromotoren geschaltet. Falls die Schaltung mit Minuspotenzial betrieben wird, kann selbstverständlich diese Polarität statt Pluspotenzial geschaltet werden. Mit den übrigen elektrischen Schaltkomponenten kann ausgewählt werden, welcher Elektromotor sich drehen soll, während die übrigen Elektromotoren kurzgeschlossen werden, so dass sie stillstehen.

In einem günstigen Verfahrensschritt werden nacheinander die Schritte ausgeführt, die gesamte Gruppe stromlos zu schalten, dann alle elektrischen Komponenten in ihre gewünschte Stellung zu schalten und dann des gemeinsamen Potenzials an die gleichsinnigen Anschlüsse anzulegen. Dadurch kann sichergestellt werden, dass bei einem nicht gleichzeitigen Schalten zweier Schaltkomponenten ein Elektromotor kurzzeitig unbeabsichtigt anläuft, obwohl seine Motorklemmen eigentlich kurzgeschlossen sind. Durch unbelastetes Schalten kann weiterhin die Lebensdauer der Schaltkomponenten erhöht werden. Bei einer Strommessung wird ferner dafür gesorgt, dass beim Nachlauf eines Elektromotors die in dessen Wicklung gespeicherte Ladung vollständig über die Strommesswiderstände zur Masse hin abfließen und gemessen werden kann. Somit ist sichergestellt, dass die Ströme sich nicht über die übrigen Motorwindungen der anderen Elektromotoren verlaufen.
In einem bevorzugten Verfahrensschritt wird jeder Elektromotor der Gruppe einzeln und unabhängig von den anderen der Gruppe über eine geeignete Schalterstellung derart betrieben, dass einer der beiden Anschlüsse an positivem Potenzial und der andere an negativem Potenzial oder umgekehrt liegt und der Stromfluss durch den Elektromotor dabei über mindestens einen Strommesswiderstand bestimmt wird oder die Anschlüsse kurzgeschlossen werden, wobei der Kurzschlusspfad über beide Strommesswiderstände oder eine geeignete Strommesseinrichtung geführt wird, oder der Strommesspfad zwischen den Anschlüssen entweder unterbrochen wird oder die Anschlüsse kurzgeschlossen werden, wobei dieser Kurzschlusspfad die Strommesswiderstände umgeht.

### Zeichnungen

Weitere Ausführungsformen, Aspekte und Vorteile der Erfindung ergeben sich auch unabhängig von ihrer Zusammenfassung in Ansprüchen, ohne Beschränkung der Allgemeinheit aus nachfolgend anhand von Zeichnungen dargestellten Ausführungsbeispielen der Erfindung.

Im Folgenden zeigen:
- Fig. 1: eine erste Gruppenschaltung mit bevorzugter Schaltungsanordnung;
- Fig. 2: eine zweite Gruppenschaltung mit bevorzugter Schaltungsanordnung;
- Fig. 3: eine dritte Gruppenschaltung mit bevorzugter Schaltungsanordnung; und
- Fig. 4: eine alternative Ausgestaltungen einer Gruppenschaltungen mit drei Elektromotoren.

### Beschreibung der Ausführungsbeispiele

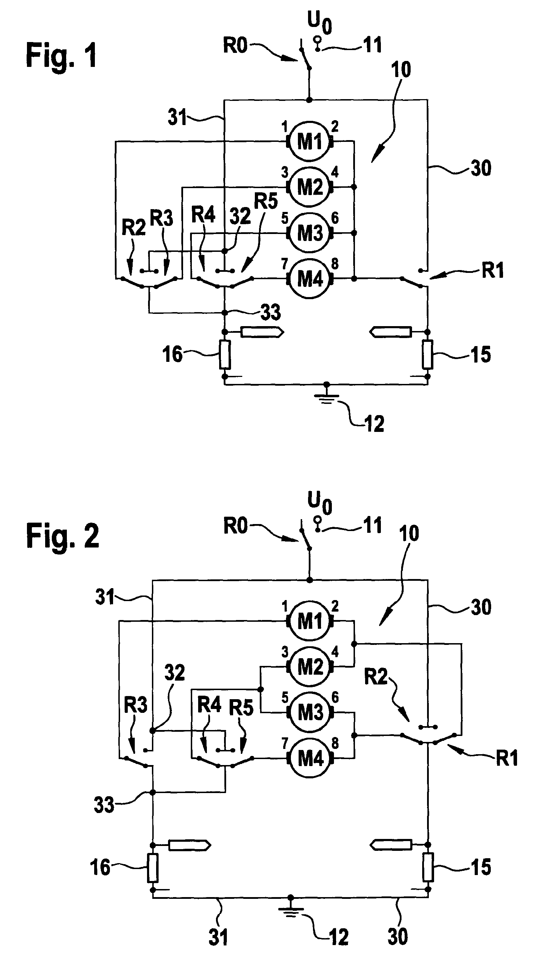

Fig. 1 zeigt beispielhaft eine erste bevorzugte Schaltungsanordnung einer Gruppenschaltung von vier Elektromotoren M1, M2, M3, M4, die in einer Gruppe 10 zusammengeschaltet sind. Jeder Elektromotor weist zwei Motorklemmen als Anschlüsse 1, 2 (M1), 3, 4 (M2), 5, 6 (M3) und 7, 8 (M4) auf. Die gleichsinnigen Anschlüsse 2, 4, 6, 8 der Elektromotoren M1, M2, M3, M4 sind über eine bevorzugt als Einfachrelais ausgebildete gemeinsame erste elektrische Schaltkomponente R1 so verschaltet, dass diese dasselbe elektrisch Potenzial aufweisen und wahlweise auf Pluspotenzial oder Massepotenzial geschaltet sind.

An die Schaltungsanordnung wird an einem Anschluss 11 eine Betriebsspannung U0, z.B. +12 V Gleichspannung, gelegt, die mit einer als Relais ausgebildeten Schaltkomponente R0 zugeschaltet und weggeschaltet werden kann. An einem Anschluss 12 ist Massepotenzial angelegt. In einem Leitungspfad 30 zwischen Anschluss 11 und Anschluss 12 ist die Schaltkomponente R1 sowie zwischen R1 und der Masse ein Strommesswiderstand 15 angeordnet, über dessen Spannungsabfall in bekannter Weise der Motorstrom bestimmt werden kann. In einem parallelen Leitungspfad 31 sind als Relais ausgebildete Schaltkomponenten R4, R5 angeordnet, sowie zwischen diesen und der Masse ein weiterer Strommesswiderstand 16. Mit den Schaltkomponenten R4, R5 können die Anschlüsse 5, 7 der Elektromotoren M3, M4 wahlweise auf Masse oder Pluspotenzial geschaltet werden. Parallel zu den Schaltkomponenten R4, R5 sind zwei weitere als Relais ausgebildete Schaltkomponenten R2, R3 angeordnet, mit denen die Anschlüsse 1, 3 der Elektromotoren M1, M2 wahlweise auf Pluspotenzial oder Masse gelegt werden können. Die Schaltkomponenten R2, R3 liegen zwischen den in dem Leitungspfad 31 liegenden Knotenpunkten 32, 33.

Soll der Elektromotor M1 betrieben, wird über R1 die Drehrichtung bestimmt und das gegensinnige Potenzial über R2 eingestellt. Die Elektromotoren M2, M3, M4 werden mit Hilfe der Schaltkomponenten R3, R4, R5 kurzgeschlossen. Soll sich der Elektromotor M2 drehen, werden die Elektromotoren M1, M3, M4 kurzgeschlossen. Diese Kombination kommt bei einer Strommessung mit zwei Strommesswiderständen 15, 16 in den Massepfaden der Leitungspfade 30, 31 aus.

Beispielhaft ergibt sich für ein Anlaufen des Elektromotors M1 eine bestimmte Schaltreihenfolge, wenn dieser in eine bestimmte Richtung drehen soll. Der jeweilige Ausgangszustand der Schaltkomponenten R0-R5 soll Masse bzw. offen sein.

Zum Anlaufen wird R1 auf Pluspotenzial, R3, R4, R5 auf Pluspotenzial und R0 auf Pluspotenzial geschaltet.

Zum Abbremsen wird R0 auf Offen, R1 auf Masse und R3, R4, R5 auf Masse geschaltet.

Sollte einer der Schalter R1, R2 ausfallen, z.B. durch "Klebenbleiben", können alle Elektromotoren (M1, M2, M3, M4) weggeschaltet werden.

Fig. 2 zeigt eine Variante der Schaltungsanordnung, bei der die als Relais ausgebildete Schaltkomponente R1 durch eine als Relais ausgebildete Schalkomponente R2a zur Drehrichtungsänderung entlastet wird. Die Schaltkomponenten R1, R2a schalten die gleichsinnigen Anschlüsse 2, 4, 6, 8 der Elektromotoren M1-M4 auf gleiches Potenzial. Mit den übrigen Schaltkomponenten R3, R4, R5 können die anderen Anschlüsse 1, 3, 5, 7 der Elektromotoren M1, M2, M3, M4 in Abhängigkeit voneinander auf Pluspotenzial oder Masse gelegt werden. Dabei ist die Schaltkomponente R3 vorzugsweise als Einfachrelais ausgebildet, während die Schaltkomponenten R4, R5 und R2a, R1 vorzugsweise als Doppelrelais ausgebildet sind. Der Anschluss 1 des Elektromotors M1 liegt an R3, der Anschluss 3 des Elektromotors M2 und der Anschluss 5 des Elektromotors M3 liegen an R4, der Anschluss 7 des Elektromotors M4 liegt an R5. Die Anschlüsse 2 und 4 der Elektromotoren M1 und M2 liegen an R1, die Anschlüsse 6 und 8 der Elektromotoren M3, M4 an R2a.

Soll der Elektromotor M1 in eine Richtung drehen, gilt folgende Schaltreihenfolge. Zum Anlaufen wird R1 auf Pluspotenzial, R2a, R4, R5 auf Pluspotenzial und R0 auf Pluspotenzial geschaltet.

Zum Abbremsen wird R0 auf Offen, R1 auf Masse und R2a, R4, R5 auf Masse geschaltet.

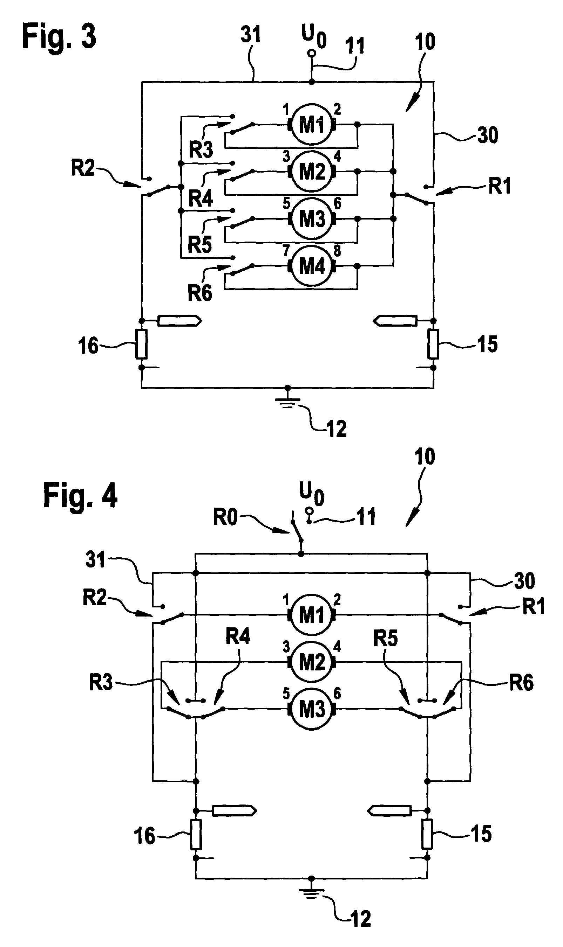

Eine weitere Variante ist in Fig. 3 dargestellt. Mit den als Relais ausgebildeten Schaltkomponenten R1 und R2 kann die Drehrichtung der Elektromotoren M1-M4 geschaltet werden und mit den übrigen Schaltkomponenten R3, R4, R5, R6 kann der entsprechende Elektromotor M1, M2, M3 oder M4 gewählt werden, der sich drehen soll, während die anderen kurzgeschlossen werden.

Diese Gruppe 10 benötigt eine zusätzliche, vorzugsweise als Einfachrelais ausgebildete Schaltkomponente R2 verglichen mit den Ausgestaltungen in den Figuren 1 und 2. Somit werden die Belastungen für die Schaltkomponenten R1 und R2 geteilt und die Schaltkomponente R0 am Anschluss 11 der Betriebsspannung U0 kann entfallen.

R1 ist im Leitungspfad 30, R2 im dazu parallelen Leitungspfad 31 zwischen Anschluss 11 und Anschluss 12 angeordnet. Wie bei den anderen Ausgestaltungen ist im jeweiligen Massepfad der Leitungspfade 30, 31 je ein Strommesswiderstand 15 bzw. 16 angeordnet. Die gleichsinnigen Anschlüsse 2, 4, 6, 8 der Elektromotoren M1, M2, M3, M4 sind mit der Schaltkomponente R1 verbunden, während Anschluss 1 des Elektromotors M1 mit R3, der Anschluss 3 des Elektromotors M2 mit R4, der Anschluss 5 des Elektromotors M3 mit R5 und der Anschluss 7 des Elektromotors M4 mit R6 verbunden ist. Die Schaltkomponenten R3, R4, R5, R6 sind mit der Schaltkomponente R2 verbunden.

Für die entsprechende Schaltreihenfolge ergibt sich beim Anlaufen des Elektromotors M1, der in eine Richtung drehen soll, dass R3 auf Pluspotenzial und R1 auf Pluspotenzial geschaltet wird. Zum Abbremsen wird R1 auf Massepotenzial und R3 auf Massepotenzial geschaltet.

Die Relais R1, R2 bilden eine H-Brücke R1, R2, bei der im Massepfad zwei Strommesswiderstände 15, 16 angeordnet sind, mit der die Gruppe 10 von Elektromotoren M1, M2, M3, M4 mit einem gewünschten Potenzial versorgbar ist. Die einzelnen Elektromotoren M1, M2, M3, M4 der Gruppe 10 sind jeweils über einen Schalter auf das außen über die H-Gruppe gegebene Potenzial schaltbar oder abschaltbar. Das effektiv für den Betrieb der Elektromotoren M1, M2, M3, M4 verantwortliche elektrische Potenzial ist direkt von einer externen Spannungsquelle abgreifbar oder vorher über eine Spannungsstellungseinrichtung auf ein gewünschtes Niveau einstellbar.

Die Ausgestaltungen in den Fig. 1, 2 und 3 stellen besonders vorteilhafte Schaltungsanordnungen dar, bei denen unabhängig von der Anzahl der Elektromotoren M1, M2, M3, M4 in der Gruppenschaltung nur zwei Strommesswiderstände 15, 16 notwendig sind.

Bei einer Gruppenschaltung mit zwei Elektromotoren und drei als Einfachrelais ausgebildeten Schaltkomponenten werden bei einer bekannten Gruppenschaltung drei Strommesswiderstände benötigt. Bei einer Gruppenschaltung mit drei Elektromotoren und vier als Einfachrelais ausgebildeten Schaltkomponenten werden bei einer bekannten Gruppenschaltung vier Strommesswiderstände benötigt. Bei einer Gruppenschaltung mit vier Elektromotoren und fünf als Einfachrelais ausgebildeten Schaltkomponenten werden bei einer bekannten Gruppenschaltung fünf Strommesswiderstände benötigt. Bei einer Gruppenschaltung mit fünf Elektromotoren und sechs als Einfachrelais ausgebildeten Schaltkomponenten werden bei einer bekannten Gruppenschaltung sechs Strommesswiderstände benötigt.

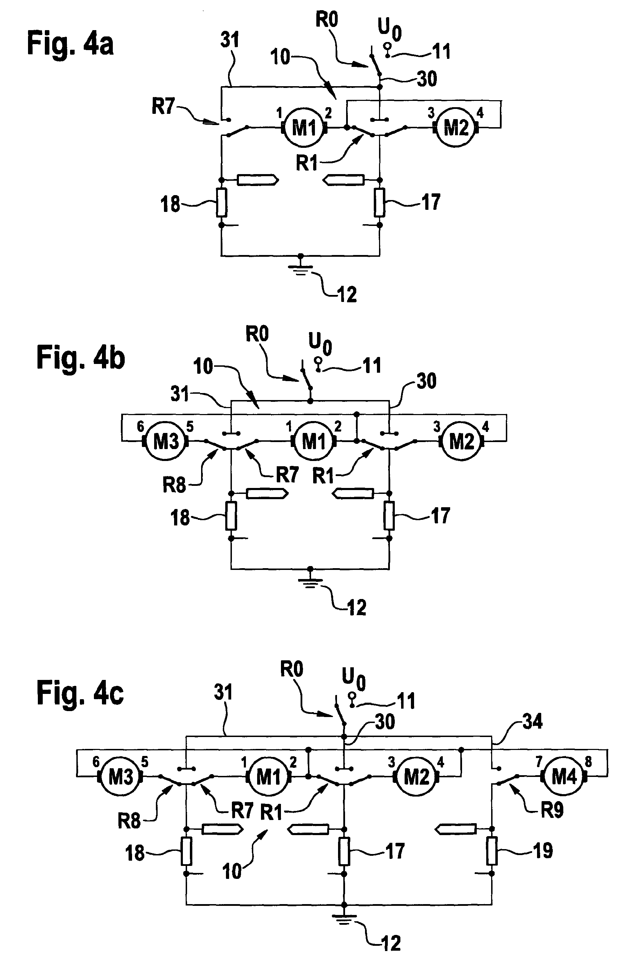

Gemäß der Erfindung kann eine Verbesserung der Gruppenschaltung von Elektromotoren erreicht werden, indem bei n Elektromotoren 2n Relais und 2 Strommesswiderstände 15, 16 vorgesehen sind, wie in Fig. 4 dargestellt ist.

Es sind drei Elektromotoren M1, M2, M3 vorgesehen. Mit den als Relais ausgebildeten Schaltkomponenten R1 und R2 kann die Drehrichtung der Elektromotoren M1-M3 geschaltet werden und mit den übrigen Schaltkomponenten R3, R4, R5, R6 kann der entsprechende Elektromotor M1, M2 oder M3 gewählt werden, der sich drehen soll, während die anderen kurzgeschlossen werden.

R1 ist im Leitungspfad 30, R2 im dazu parallelen Leitungspfad 31 zwischen Anschluss 11 und Anschluss 12 angeordnet. Wie bei den anderen Ausgestaltungen ist im jeweiligen Massepfad der Leitungspfade 30, 31 je ein Strommesswiderstand 15 bzw. 16 angeordnet. Der Anschluss 1 des Elektromotors M1 ist mit R2 und der Anschluss 2 mit R1 verbunden. Die gleichsinnigen Anschlüsse 4, 6 der Elektromotoren M2, M3 sind mit R5 bzw. R6 verbunden, während die Anschlüsse 3, 5 der Elektromotoren M2, M3 mit R3, R4 verbunden sind.

## Patentansprüche

1. Schaltungsanordnung mit wenigstens zwei Elektromotoren (M1,M2,M3,M4), die in wenigstens einer Gruppe (10) zusammengeschaltet sind, wobei jeder Elektromotor (M1,M2,M3,M4) zwei Anschlüsse (1,2;3,4;5,6;7,8) aufweist und gleichsinnige Anschlüsse (2,4,6,8) der Elektromotoren (M1,M2,M3,M4) über wenigstens eine gemeinsame erste elektrische Schaltkomponente (R1,R2a) so verschaltbar sind, dass die gleichsinnigen Anschlüsse (2,4,6,8) dasselbe elektrische Potential aufweisen, **dadurch gekennzeichnet, dass** entsprechend der Anzahl der Elektromotoren (M1,M2,M3,M4) in der Gruppe (10) weitere elektrische Schaltkomponenten (R2,R3,R4,R5,R6) vorgesehen sind, mit denen die Elektromotoren (M1,M2,M3,M4) an ihrem jeweils anderen Anschlusse (1,3,5,7) unabhängig voneinander wahlweise auf Potential oder Massepotential schaltbar sind.

2. Schaltungsanordnung nach Anspruch 1, **dadurch gekennzeichnet, dass** die elektrische Schaltkomponente (R1, R2a) ausgebildet ist, die gleichsinnigen Anschlüsse (2, 4, 6, 8) wahlweise auf Potenzial oder Massepotenzial zu schalten.

3. Schaltungsanordnung nach einem der vorhergehenden Ansprüche, **dadurch gekennzeichnet, dass** wenigstens eine der elektrischen Schaltkomponenten (R1, R2a, R2, R3, R4, R5, R6) als Relais ausgebildet ist.

4. Schaltungsanordnung nach einem der Ansprüche 1 bis 3, **dadurch gekennzeichnet, dass** wenigstens eine der elektrischen Schaltkomponenten (R1, R2a, R2, R3, R4, R5, R6) als Halbleiterschaltung ausgebildet ist.

5. Schaltungsanordnung nach einem der vorhergehenden Ansprüche, **dadurch gekennzeichnet, dass** in einer Gruppe (10) genau zwei Strommesswiderstände (15, 16) vorgesehen sind.

6. Schaltungsanordnung nach einem der Ansprüche 1 bis 5, **dadurch gekennzeichnet, dass** in einer Gruppe (10) eine von der Anzahl verwendeter Einfach- und Doppelrelais (R1, R2a, R2, R3, R4, R5, R6) abhängige Anzahl von Strommesswiderständen (15, 16) vorgesehen sind.

7. Schaltungsanordnung nach einem der vorhergehenden Ansprüche, **dadurch gekennzeichnet, dass** jeder Elektromotor (M1, M2, M3, M4) der Gruppe (10) einzeln und unabhängig von den anderen der Gruppe (10) über eine geeignete Schalterstellung derart betreibbar ist, dass
- einer der beiden Anschlüsse (1, 2; 3, 4; 5, 6; 7, 8) an positivem Potenzial und der andere an negativem Potenzial oder umgekehrt liegt und der Stromfluss durch den Elektromotor (M1, M2, M3, M4) dabei über mindestens einen Strommesswiderstand (15, 16) bestimmbar ist oder
- die Anschlüsse (1, 2; 3, 4; 5, 6; 7, 8) kurzgeschlossen sind, wobei der Kurzschlusspfad über beide Strommesswiderstände (15, 16) oder eine geeignete Strommesseinrichtung geführt ist, oder
- der Strommesspfad zwischen den Anschlüssen (1, 2; 3, 4; 5, 6; 7, 8) entweder unterbrochen ist oder die Anschlüsse (1, 2; 3, 4; 5, 6; 7, 8) kurzgeschlossen sind, wobei dieser Kurzschlusspfad die Strommesswiderstände (15, 16) umgeht.

8. Schaltungsanordnung nach einem der vorhergehenden Ansprüche, **dadurch gekennzeichnet, dass** eine H-Brücke (R1, R2) vorgesehen ist, bei der im Massepfad zwei Strommesswiderstände (15, 16) angeordnet sind, und mit der die Gruppe (10) von Elektromotoren (M1, M2, M3, M4) mit einem gewünschten Potenzial versorgbar ist.

9. Schaltungsanordnung nach Anspruch 9, **dadurch gekennzeichnet, dass** die einzelnen Elektromotoren (M1, M2, M3, M4) der Gruppe (10) jeweils über einen Schalter () auf das außen über die H-Brücke (R1, R2) gegebene Potenzial schaltbar oder abschaltbar ist.

10. Schaltungsanordnung nach einem der vorhergehenden Ansprüche, **dadurch gekennzeichnet, dass** das effektiv für den Betrieb der Elektromotoren (M1, M2, M3, M4) verantwortliche elektrische Potenzial direkt von einer externen Spannungsquelle abgreifbar oder über eine Spannungsstellungseinrichtung auf ein gewünschtes Niveau einstellbar ist.

11. Verfahren zum Betreiben einer Schaltungsanordnung mit wenigstens zwei Elektromotoren (M1,M2,M3,M4) in einer Gruppe (10) einer Gruppenschaltung, wobei gleichsinnige Anschlüsse (2,4,6,8) der Elektromotoren (M1,M2,M3,M4) über wenigstens eine gemeinsame erste elektrische Schaltkomponente (R1,R2a) so verschaltet werden, dass die gleichsinnigen Anschlüsse (2,4,6,8) dasselbe elektrische Potential aufweisen, **dadurch gekennzeichnet, dass** die Elektromotoren (M1,M2,M3,M4) an ihrem jeweils anderen Anschluss (1,3,5,7) mittels weiterer elektrischen Schaltkomponenten (R2,R3,R4,R5,R6) unabhängig voneinander wahlweise auf Potential oder Massepotential geschaltet werden.

12. Verfahren nach Anspruch 12 oder 13, **dadurch gekennzeichnet, dass** nacheinander die Schritte ausgeführt werden stromlos Schalten der gesamten Gruppe (10),
Schalten aller elektrischen Schaltkomponenten (R1, R2a, R2, R3, R4, R5, R6) in ihre gewünschte Stellung und
Anlegen des gemeinsamen Potenzials an die gleichsinnigen Anschlüsse (2, 4, 6, 8).

13. Verfahren nach einem der Ansprüche 12 bis 14, **dadurch gekennzeichnet, dass** jeder Elektromotor (M1, M2, M3, M4) der Gruppe (10) einzeln und unabhängig von den anderen der Gruppe (10) über eine geeignete Schalterstellung derart betrieben wird, dass
- einer der beiden Anschlüsse (1, 2; 3, 4; 5, 6; 7, 8) an positivem Potenzial und der andere an negativem Potenzial oder umgekehrt liegt und der Stromfluss durch den Elektromotor (M1, M2, M3, M4) dabei über mindestens einen Strommesswiderstand (15, 16) bestimmt wird oder
- die Anschlüsse (1, 2; 3, 4; 5, 6; 7, 8) kurzgeschlossen werden, wobei der Kurzschlusspfad über beide Strommesswiderstände (15, 16) oder eine geeignete Strommesseinrichtung geführt wird, oder
- der Strommesspfad zwischen den Anschlüssen (1, 2; 3, 4; 5, 6; 7, 8) entweder unterbrochen wird oder die Anschlüsse (1, 2; 3, 4; 5, 6; 7, 8) kurzgeschlossen werden, wobei dieser Kurzschlusspfad die Strommesswiderstände (15, 16) umgeht.

## Claims

1. Circuit arrangement having at least two electric motors (M1, M2, M3, M4) connected in at least one group (10), wherein each electric motor (M1, M2, M3, M4) has two terminals (1, 2; 3, 4; 5, 6; 7, 8) and similar terminals (2, 4, 6, 8) of the electric motors (M1, M2, M3, M4) can be connected via at least one common first electrical switching component (R1, R2a) in such a way that the similar terminals (2, 4, 6, 8) have the same electrical potential, **characterized in that** further electrical switching components (R2, R3, R4, R5, R6), with which the electric motors (M1, M2, M3, M4) can optionally be connected independently of one another to potential or earth potential at their respective other terminals (1, 3, 5, 7), are provided in accordance with the number of electric motors (M1, M2, M3, M4) in the group (10).

2. Circuit arrangement according to Claim 1, **characterized in that** the electrical switching component (R1, R2a) is designed to switch the similar terminals (2, 4, 6, 8) optionally to potential or to earth potential.

3. Circuit arrangement according to one of the preceding claims, **characterized in that** at least one of the electrical switching components (R1, R2a, R2, R3, R4, R5, R6) is embodied as a relay.

4. Circuit arrangement according to one of Claims 1 to 3, **characterized in that** at least one of the electrical switching components (R1, R2a, R2, R3, R4, R5, R6) is embodied as a semiconductor circuit.

5. Circuit arrangement according to one of the preceding claims, **characterized in that** precisely two current-measuring resistors (15, 16) are provided in a group (10).

6. Circuit arrangement according to one of Claims 1 to 5, **characterized in that** a number of current-measuring resistors (15, 16) which depends on the number of single and double relays (R1, R2a, R2, R3, R4, R5, R6) used are provided in a group (10).

7. Circuit arrangement according to one of the preceding claims, **characterized in that** each electric motor (M1, M2, M3, M4) of the group (10) can be operated individually and independently of the other electric motors (M1, M2, M3, M4) in the group (10) by means of a suitable switch position in such a way that
- one of the two terminals (1, 2; 3, 4;, 5, 6;, 7, 8) is at the positive potential and the other terminal (1, 2; 3, 4; 5, 6; 7, 8) is at the negative potential, or vice versa, and the flow of current through the electric motor (M1, M2, M3, M4) can be determined here by means of at least one current-measuring resistor (15, 16) or
- the terminals (1, 2; 3, 4; 5, 6; 7, 8) are short-circuited, wherein the short-circuiting path is conducted via the two current-measuring resistors (15, 16) or a suitable current-measuring device, or
- the current-measuring path between the terminals (1, 2; 3, 4; 5, 6; 7, 8) is either interrupted, or the terminals (1, 2; 3, 4; 5, 6; 7, 8) are short-circuited, wherein the short-circuiting path bypasses the current-measuring resistors (15, 16).

8. Circuit arrangement according to one of the preceding claims, **characterized in that** an H-bridge (R1, R2) is provided in which two current-measuring resistors (15, 16) are arranged in the earth path, and with which the group (10) of electric motors (M1, M2, M3, M4) can be supplied with a desired potential.

9. Circuit arrangement according to Claim 9, **characterized in that** the individual electric motors (M1, M2, M3, M4) of the group (10) can each be connected or disconnected, via a switch (), to the potential which is provided externally via the H-bridge (R1, R2).

10. Circuit arrangement according to one of the preceding claims, **characterized in that** the electrical potential which is effectively responsible for the operation of the electric motors (M1, M2, M3, M4) can be tapped directly from an external voltage source or can be set to a desired level by means of a voltage-setting device.

11. Method for operating a circuit arrangement having at least two electric motors (M1, M2, M3, M4) in a group (10) of a group circuit, wherein similar terminals (2, 4, 6, 8) of the electric motors (M1, M2, M3, M4) are connected via at least one common electrical switching component (R1, R2a) in such way that the similar terminals (2, 4, 6, 8) have the same electrical potential, **characterized in that** the electric motors (M1, M2, M3, M4) are connected independently of one another at their respective other terminal (1, 3, 5, 7) either to potential or to earth potential by means of further electrical switching components (R2, R3, R4, R5, R6).

12. Method according to Claim 11, **characterized in that** the steps of
de-energizing the entire group (10),
switching all the electrical switching components (R1, R2a, R2, R3, R4, R5, R6) into their desired position and
applying the common potential to the similar terminals (2, 4, 6, 8).
are carried out in succession.

13. Method according to one of Claims 11 or 12, **characterized in that** each electric motor (M1, M2, M3, M4) of the group (10) is operated individually and independently of the other electric motors (M1, M2, M3, M4) of the group (10) by means of a suitable switch position in such a way that
- one of the two terminals (1, 2; 3, 4;, 5, 6, 7, 8) is at the positive potential and the other terminal (1, 2; 3, 4; 5, 6; 7, 8) is at the negative potential, or vice versa, and the flow of current through the electric motor (M1, M2, M3, M4) is determined here by means of at least one current-measuring resistor (15, 16) or
- the terminals (1, 2; 3, 4; 5, 6; 7, 8) are short-circuited, wherein the short-circuiting path is conducted via the two current-measuring resistors (15, 16) or a suitable current-measuring device, or
- the current-measuring path between the terminals (1, 2; 3, 4; 5, 6; 7, 8) is either interrupted, or the terminals (1, 2; 3, 4; 5, 6; 7, 8) are short-circuited, wherein the short-circuiting path bypasses the current-measuring resistors (15, 16).

## Revendications

1. Ensemble circuit doté d'au moins deux moteurs électriques (M1, M2, M3, M4) interconnectés dans au moins un groupe (10), chaque moteur électrique (M1, M2, M3, M4) comportant deux raccords (1, 2 ; 3, 4 ; 5, 6 ; 7, 8) et les raccords (2, 4, 6, 8) de même sens des moteurs électriques (M1, M2, M3, M4) pouvant être connectés par l'intermédiaire d'au moins un premier composant de contact électrique (R1, R2a) commun, de telle sorte que les raccords (2, 4, 6, 8) de même sens présentent le même potentiel électrique, **caractérisé en ce que** d'autres composants de contact électrique (R2, R3, R4, R5, R6) sont prévus dans le groupe en fonction du nombre de moteurs électriques (M1, M2, M3, M4) du groupe (10), les moteurs électriques (M1, M2, M3, M4) pouvant être commutés indépendamment les uns des autres au choix sur le potentiel ou sur le potentiel de masse au niveau de leurs respectivement autres raccords (1, 3, 5, 7) à l'aide de ces composants.

2. Ensemble circuit selon la revendication 1, **caractérisé en ce que** le composant de contact électrique (R1, R2a) est réalisé de façon à commuter les raccords (2, 4, 6, 8) de même sens au choix sur le potentiel ou sur le potentiel de masse.

3. Ensemble circuit selon l'une quelconque des revendications précédentes, **caractérisé en ce qu'**au moins un des composants de contact électrique (R1, R2a, R2, R3, R4, R5, R6) prend la forme d'un relais.

4. Ensemble circuit selon l'une quelconque des revendications 1 à 3, **caractérisé en ce qu'**au moins un des composants de contact électrique (R1, R2a, R2, R3, R4, R5, R6) prend la forme d'un circuit semiconducteur.

5. Ensemble circuit selon l'une quelconque des revendications précédentes, **caractérisé en ce qu'**exactement deux résistances de courant (15, 16) sont prévues dans un groupe (10).

6. Ensemble circuit selon l'une quelconque des revendications 1 à 5, **caractérisé en ce que** le nombre de résistances de courant (15, 16) prévu dans un groupe (10) dépend du nombre de relais simple et double (R1, R2a, R2, R3, R4, R5, R6).

7. Ensemble circuit selon l'une quelconque des revendications précédentes, **caractérisé en ce que** chaque moteur électrique (M1, M2, M3, M4) du groupe (10) peut être entraîné de façon individuelle et indépendamment des autres moteurs du groupe (10) par l'intermédiaire d'une position du commutateur de telle sorte que :
- un des deux raccords (1, 2 ; 3, 4 ; 5, 6 ; 7, 8) repose contre le potentiel positif et l'autre raccord repose contre le potentiel négatif ou inversement et que le flux de courant traversant le moteur électrique (M1, M2, M3, M4) peut être défini par l'intermédiaire d'au moins une résistance de courant (15, 16) ; ou
- que les raccords (1, 2 ; 3, 4 ; 5, 6 ; 7, 8) sont fermés par court-circuit, le chemin de court-circuitage passant au-dessus des deux résistances de courant (15, 16) ou du dispositif de mesure de courant adapté ; ou
- le chemin de passage du courant entre les raccords (1, 2 ; 3, 4 ; 5, 6 ; 7, 8) étant soit coupé soit les raccords (1, 2 ; 3, 4 ; 5, 6 ; 7, 8) étant fermés par court-circuit, ce chemin de court-circuitage contournant les résistances de courant (15, 16).

8. Ensemble circuit selon l'une quelconque des revendications précédentes, **caractérisé en ce qu'**un pont H (R1, R2) est prévu, dans le chemin de masse duquel deux résistances de courant (15, 16) sont disposées et avec lequel le groupe (10) de moteurs électriques (M1, M2, M3, M4) peut être déconnecté à un potentiel souhaité.

9. Ensemble circuit selon la revendication 9, **caractérisé en ce que** les différents moteurs électriques (M1, M2, M3, M4) du groupe (10) peuvent être connectés ou déconnectés respectivement sur le potentiel placé sur l'extérieur par l'intermédiaire du pont H (R1, R2) via un commutateur ().

10. Ensemble circuit selon l'une quelconque des revendications précédentes, **caractérisé en ce que** le potentiel électrique responsable du fonctionnement des moteurs électriques (M1, M2, M3, M4) peut être saisi directement par une source de tension externe ou réglable à un niveau souhaité via un dispositif de réglage de tension.

11. Procédé pour faire fonctionner un ensemble circuit doté d'au moins deux moteurs électriques (M1, M2, M3, M4) dans un groupe (10) de circuit groupé, les raccords (2, 4, 6, 8) de même sens des moteurs électriques (M1, M2, M3, M4) pouvant être connectés de telle sorte par l'intermédiaire d'au moins un premier composant de contact électrique (R1, R2a) commun que les raccords (2, 4, 6, 8) de même sens présentent le même potentiel électrique, **caractérisé en ce que** les moteurs électriques (M1, M2, M3, M4) sont commutés indépendamment les uns des autres au choix sur le potentiel ou sur le potentiel de masse avec leurs autres composants de contact électrique (R2, R3, R4, R5, R6), au niveau de leur respectivement autre raccord (1, 3, 5, 7).

12. Procédé selon la revendication 11, **caractérisé en ce que** les étapes suivantes sont réalisées les unes après les autres :
- connexion sans courant de l'ensemble du groupe (10) ;
- connexion de tous les composants de contact électrique (R1, R2a, R2, R3, R4, R5, R6) dans leur position souhaitée ; et
- mise sous tension du potentiel commun au niveau des raccords (2, 4, 6, 8) de même sens.

13. Procédé selon l'une quelconque des revendications 11 à 12, **caractérisé en ce que** chaque moteur électrique (M1, M2, M3, M4) du groupe (10) peut être entraîné de façon individuelle et indépendamment des autres moteurs du groupe (10) par l'intermédiaire d'une position adaptée du commutateur de telle sorte que :
- un des deux raccords (1, 2 ; 3, 4 ; 5, 6 ; 7, 8) repose contre le potentiel positif et l'autre contre le potentiel négatif ou inversement et que le flux de courant traversant le moteur électrique (M1, M2, M3, M4) est déterminé par l'intermédiaire d'au moins une résistance de courant (15, 16) ; ou
- les raccords (1, 2 ; 3, 4 ; 5, 6 ; 7, 8) sont fermés par court-circuit, le chemin de court-circuitage étant passant au-dessus des deux résistances de courant (15, 16) ou d'un dispositif de mesure de courant adapté ; ou
- le chemin de passage du courant situé entre les raccords (1, 2 ; 3, 4 ; 5, 6 ; 7, 8) étant soit coupé ou les raccords (1, 2 ; 3, 4 ; 5, 6 ; 7, 8) étant fermés par court-circuit, ce chemin de court-circuitage contournant les résistances de courant (15, 16).
